# EUROPEAN PATENT APPLICATION

(11) **EP 1 719 796 A1**
(43) Date of publication of application: **08.11.2006**
(21) Application number: 05076035.4
(22) Date of filing: 03.05.2005
(51) Int. Cl.: C08K 5/00, C08K 5/16, C08K 5/3492, C08L 67/02

(54) **A polyester moulding composition for use in electrical devices**

(71) Applicant: DSM IP Assets B.V., 6411 TE Heerlen (NL)
(72) Inventor: Kuijk, Egbert Willem, 3500 Hasselt (BE); Zwartkruis, Theodorus J. G., 6132 HL Sittard (NL); Janssen, Robert H. C., 6181 BL Elsloo (NL)
(74) Representative: van der Ploeg, Antonius Franciscus M.J.

(57) **Abstract**

The invention relates to A polyester moulding composition consisting of (A) 100 parts by weight (pbw) of a polymer composition consisting of (A-i) at least 50 pbw of a thermoplastic polyester, and, optionally, (A-ii) at least one other polymer, (B) between 2 and 40 pbw of a flame retardant system consisting of (B-i) a nitrogen based organic flame retardant compound free of phosphorus or a phosphorus free salt thereof, and, optionally, (B-ii) less than 1 pbw of a phosphorus containing flame retardant compound, (C) between 0.01 and 1 pbw of a mould release agent, and optionally (D) 0-10 pbw of a fibrous reinforcing agent, and (E) 0-100 pbw of other additives. The invention also relates to the use of the composition for making molded parts, in particular part for use in electrical or electronic applications, and to these molded parts.

## Description

The invention relates to a polyester molding composition suitable for making molded parts that can be used in electrical devices, more particular for electrical application like household appliances (such as connectors) and enclosures (casings) in electrical circuit breakers and residual current devices (RCDs), and in particular mini-or micro circuit breakers (MCBs),

Under normal use conditions, the molded parts and the materials used therein may be exposed to severe electrical and thermal conditions, such as heating due to electrical currents, mechanical impact in case of electrical short-circuits and thermal tripping, electrical discharge and current leakage across its surface. These conditions not only require that the material from which the casing is made has good mechanical properties, in particular sufficient impact resistance to withstand the impact during electrical short-circuit discharge, but also good electrical properties. The latter include high tracking resistance and good glow wire resistance, expressed in high ignition temperatures and good flame extinguishing behavior. The material must also have good dimensional stability at elevated temperature and under mechanical load in order to allow accurate calibration and sufficient control of the thermal tripping characteristics under different climatic conditions. Furthermore, important properties for the molding composition include good processability, i.e. good flow and short molding cycle times and good insulation properties. In addition to that all there is a general trend towards miniaturization, and towards halogen free flame retardant materials, making the above demands even more critical.

For many electrical applications international standards have been set, specifying the standard method, test conditions and the level of performance that has to be met.

A standard method commonly used for determining the tracking resistance is UL-746A, which corresponds with ASTM D-3638-85 and IEC 60112-fourth edition. In this method tracking resistance is measured as the comparative tracking index (CTI).

For measuring the flame retardancy the Glow Wire Test is commonly accepted and used as a standard, in particular in Europe, but also in other parts of the world. This test can be performed according to the International standard IEC 60695-2-11, which test is performed on end-products and rated as a pass or fail (herein denoted as "GWFI-EPT"), and according to IEC 60695-2-12, wherein the flame retardancy is denoted as glow wire flammability index (GWFI). In addition to that in several household appliances the glow wire ignition temperature (GWIT) is important, which is measured according to IEC 60695-2-13. The requirements for the Glow Wire Test (GWFI-EPT, GWFI and GWIT) always have to relate to the thickness in which the material is applied.

For the evaluation of the behavior under different climatic conditions a kind of tropical tests are done with variable temperature and humidity cycles.

According to the standards, the minimum CTI value for materials used for household appliances is 250 Volt. This value however, directly relates to the voltage applied and the dimensions of the design. In practice, the market generally demands at least 400 Volt in order to enable higher voltage applications and/or to enable further downsizing of the dimensions. Next to that, the material used for household appliances must have a GWFI of at least 850°C and a GWIT of at least 775 °C. The material used for MCBs and RCDs must have a GWFI-EPT of at least 960°C. There is no minimum requirement specified for the CTI, but the higher the better, and generally a CTI value of at least 400 Volt is used.

A universal material suitable for electric household applications and MCBs and RCDs should therefore comply with the following requirements: a CTI of at least 400 Volt, and a GWIT of at least 775 °C, a GWFI of at least 850°C and a GWFI-EPT of at least 960°C (775 °C if only for household appliances), all preferably at 1.0 mm.

Glass fiber reinforced and/or mineral filled polyamide molding compositions have been the material of choice for housings for MCBs for a long period. However, demands are increasing and the MCB and RCD producers are looking to further improving their products in terms of economics, performance and/or environmental requirements. Despite the glass fiber reinforcement, the polyamide moulding compositions are critical in their dimensional stability and show too much creep under mechanical force at elevated temperature and humid conditions.

Thermoplastic polyester moulding compositions have also been considered for quite some time already as an alternative material in MCBs, however with limited commercial success so far. Polyester moulding compositions, for example based on poly-alkylene terephthalate as the thermoplastic polyester, have utility as materials for a wide range of applications, from automotive parts to electric and electronic appliances. These materials have valuable characteristics including strength, toughness, high gloss, and solvent resistance. Flame retardancy is achieved with a variety of flame retardants. Numerous flame-retardants for polyesters are known, providing flame retardancy but meanwhile compromising electrical, mechanical properties and / or other properties. The consequential trade-off of the presence of the flame retardants in terms of reduced mechanical properties is generally compensated by the presence of reinforcing materials. Halogen free flame retardant thermoplastic polyester compositions with a CTI of at least 400 Volt, as well as a reported excellent moldability, excellent mechanical properties, impact resistance and flame retardancy and containing a halogen free flame retardant system are known from JP-113335531-A. The composition known from this patent application comprises as the polyester a blend of PBT and PET and further comprises relative to 100 pbw (parts by weight) of polyester: 1-100 pbw fibrous reinforcement, 1-200 pbw polyethylene and/or ethylene copolymer, and as the flame retardant system 0.1-50 pbw red phosphorus, optionally in combination with a triazine cyanurate compound (0-100 pbw), next to further optional components. A disadvantage of the known composition is that red phosphorus gives rise to formation of volatile poisonous material during compounding and is therefore not desirable in compounding facilities.

Thermoplastic polyester compositions with a CTI of at least 400 Volt are also known from EP-824130-A2. The known compositions comprise a halogen containing flame retardant, mineral filler and an effective amount of a CTI improving pyro- or polyphosphate selected from metal (acid) pyrophosphate, metal (acid) polyphosphates and mixtures thereof. Halogenated flame retardant agents are less desirable because of the increasing demand for ecological friendly ingredients.

Thermoplastic polyester compositions with a GWT value, corresponding with the GWFI-EPT as defined above, of 960°C at 1 and 3 mm are known from WO-03/018680 and from EP-1117739-B1. The known compositions from these patent applications contain 1-30 wt.% of phosphorus containing flame retardant being an arylenedioxy-tetrakisphenyldiphosphate or a substituted and/or oligomeric derivatives thereof, and 1-30 wt.% of a nitrogen compound. The examples in both patents typically contain 10-15 wt% melamine cyanurate and 20 wt.% of the phosphorus containing flame retardant, next to 20-30 wt% glass fibers. Both patent documents are silent about the CTI properties of the known compositions.

Halogen free flame retardant thermoplastic polyester compositions with a CTI of at least 600 Volt and a GWFI test result (at 1 mm) of 960°C are known from WO-99/02606. It is noted however, that for one example a GWFI of 750°C is reported. The known compositions of WO-99/02606 are primarily glass fiber reinforced compositions, comprising melamine cyanurate and an organic phosphorus-containing flame retardant containing at least 14 wt.% phosphorous.

A general disadvantage of polyester compositions comprising phosphorus-containing flame retardants is that the thermal resistance, resulting in a decrease in mechanical properties upon ageing at elevated temperature.

The problem of hydrolysis has been addressed in two Japanese patent applications, which advice the use of specific phosphorus compounds. JP-09157503-A describes a thermoplastic molding composition with 0.1-15 wt.% melamine cyanurate and 0.1-15 wt.% of an arylenedioxy-tetrakisphenyldiphosphate or substituted and/or oligomeric derivatives thereof. In the examples in JP-09157503-A at least 1 pbw and typically 5-20 pbw of the diphosphate, relative to 100 pbw polyester is used. Similar thermoplastic molding compositions with 0.1-10 wt.% melamine cyanurate and 0.1-10 wt.% of an arylenedioxy-tetrakisphenyldiphosphate or substituted and/or oligomeric derivatives thereof are described in JP-08269306-A. In the examples in JP-08269306-A 2-15 pbw of the diphosphate, relative to 100 pbw polyester is used. These two patent applications are silent about CTI properties and glow wire properties of the compositions mentioned therein.

Halogen free flame retardant thermoplastic polyester compositions with a CTI of at least 400 Volt are also known from JP-2000119494-A1. The known compositions from the patent publication JP-2000119494-A1 are glass fiber reinforced compositions, which comprise melamine cyanurate, and optionally organic phosphorus-containing flame retardants, in combination with 1-15 wt.% compressed pulverized talc to attain good flammability and CTI properties. As illustrated by the examples, if the compressed pulverized talc is left out, or if it is replaced by untreated talc or the glass content is lowered to e.g. 3 wt.%, the CTI value drops to values below 400 Volt. Furthermore, if no talc is used at all, not only the CTI drops to values below 400 Volt, but also the flame retardancy drops significantly.

Therefore there is still a need for thermoplastic molding compositions which are free of halogen containing flame retardants and red phosphorus, meanwhile having good electrical and flame retardancy properties, sufficient mechanical properties and good performance under tropical conditions for use in e.g. electrical circuit breakers and/or house-hold appliances.

It is an objective of the present invention to provide a thermoplastic molding composition, free of halogen containing flame retardants and red phosphorus, having a CTI of at least 400 Volt, measured at 1.0 mm a GWIT of at least 775 °C, a GWFI of at least 850°C, and preferably a GWFI-EPT of at least 960°C, good demoulding behaviour and good mechanical_properties and good retention of mechanical properties at elevated temperature and/or high relative humidity.

This objective has been achieved with the polyester moulding composition according to the invention, consisting of
(A) 100 parts by weight (pbw) of a polymer composition consisting of
   (A-i) at least 50 pbw of a thermoplastic polyester, and, optionally,
   (A-ii) at least one other polymer,
(B) between 2 and 40 pbw of a flame retardant system consisting of
   (B-i) a nitrogen based organic flame retardant compound free of phosphorus, or a phosphorus free salt thereof, and, optionally,
   (B-ii) less than 1 pbw of a phosphorus containing flame retardant compound, of which less than 0.1 pbw of an arylenedioxy-tetrakisphenyl-diphosphate and substituted and oligomeric derivatives thereof,
(C) between 0.01 and 1 pbw of a mould release agent, and, optionally,
(D) 0-10 pbw of a fibrous reinforcing agent, and
(E) 0-100 pbw of other additives.

It is noted that for the amounts in "parts by weight" mentioned here above and also further below, the parts by weight (pbw) always relate to the 100 pbw of the polymer composition (A), unless indicated otherwise.

It has been found that the composition according to the invention has a very interesting combination of properties, which are all relevant for the use in electrical applications like MCB's. The inventive composition, in which the flame retardant system consists only of or essentially only of the said 'nitrogen based organic flame retardant compound', has good flame retardant properties, i.e. it gives a GWIT of at least 775°C at 1.0 mm already with the said flame retardant present in a low amount relative to the polymer composition, and without the presence, or nearly so, of a phosphorus containing flame retardant compound. The composition according to the invention has good electrical properties, i.e. a CTI of at least 400 Volt, even without the need of the addition of a CTI improving agent. At the same time the new composition has sufficient moulding properties and mechanical properties and good performance under tropical conditions to make the composition suitable for use in electrical circuit breakers.

Polyester compositions with a nitrogen based organic flame retardant compound free of phosphorus (B-i), more particular melamine cyanurate, as sole flame retardant are described in US patent US-5,684,071. The known compositions in this patent comprise 0.1 to 50 wt%, relative to the weight of component (B-i), of an organic additive having two functional groups. The additive having two functional groups is said to be needed to improve a range of properties, including the flame retarding properties, rated as UL-94-V test results and LOI. In several of the examples glass fiber reinforcement is present in an amount of 30 wt.%. In two comparative examples in US-5,684,071, a non-reinforced polyester composition consisting of 80 wt.% PBT and 20 wt.% melamine cyanurate is mentioned. Only the LOI is mentioned for this composition. The patent is silent about the CTI, GWFI and GWIT and demoulding properties thereof.

The term 'nitrogen based organic flame retardant compound' is understood herein to be a flame retardant compound consisting of carbon atoms, hydrogen atoms and nitrogen atoms, and optionally other heterogeneous atoms like oxygen atoms, but excluding phosphorus atoms.

As the nitrogen based organic flame retardant compound (component B-i) in the composition according to the invention can be used, for example, triazines (such as melamine based compounds), guanidines, cyanurates, isocyanurates, and mixtures thereof. Suitable salts of the nitrogen based organic flame retardant compounds are, for example, borates and oxalates. Examples of suitable salts include melamine-neopentylglycolborate, and guanidine sulfate.

Preferably the nitrogen based organic flame retardant compound is a melamine based compound. Suitable melamine based compounds are compounds selected from the group consisting of melamine, melamine cyanurate, and condensation products of melamine, and mixtures thereof. Suitable melamine condensation products are for example melam, melem, melone and menthone and higher condensation products of melamine. Melamine condensation products can, for example, be obtained with the process described in WO-A-96/16948.

More preferably, the nitrogen based organic flame retardant compound is a compound selected from the group consisting of melamine cyanurate and condensation products of melamine, and mixtures thereof. Still more preferably, the nitrogen containing organic flame retardant compound (B-i) consists for at least 90 wt% of melamine cyanurate, and most preferably, the nitrogen based organic flame retardant compound consists for 100 wt. % of melamine cyanurate.

Melamine cyanurate is the name commonly used for the adduct or salt of melamine (2,4,6-triamino-1,3,5-triazine) and (iso)cyanuric acid (2,4,6-trihydroxy-1,3,5-triazine or its tautomer), as described in for example US 4,180,496. Melamine cyanurate is preferable of small particle size, or can be easily dispersed into small particles in a polyester continuous phase during mixing. Suitably, melamine cyanurate has a particle size distribution with 50% of the particles (d50) smaller than about 50 micrometer (µm), preferably particle size is below 25, below 10, or even below 5 µm.

The composition according to the invention comprises 2-40 pbw of the flame retardant system consisting essentially of nitrogen based organic flame retardant compound. Lower amounts of nitrogen based organic flame retardant compound appeared not to result in the desired GWIT classification, whereas still higher amounts did not improve the CTI or GWIT values and only reduced the mechanical properties and processability of the composition.

Preferably, the composition comprises the nitrogen based organic flame retardant compound in an amount between 2 and 30 pbw, more preferably between 5 and 25 pbw or even between 5 and 20 pbw and still more preferably between 7.5 and 15 pbw It has been found that with a higher minimum amount of the nitrogen based organic flame retardant compound a higher GWFI rating or a GWFI rating with lower average burning times is obtained, whereas with a lower maximum amount a higher GWIT rating is obtained.

Next to the nitrogen based organic flame retardant compound (B-i), the composition according to the invention optionally contains less than 1 pbw of a phosphorus containing flame retardant compound. If the phosphorus containing flame retardant compound comprises an arylenedioxy-tetrakisphenyldiphosphate and /or a substituted and oligomeric derivative thereof, the amount thereof is less than 0.1 pbw.

A phosphorus containing flame retardant compound is expressly meant herein not to be a compound consisting only of phosphorus, i.e. excluding elementary phosphorus, such as red phosphorus.

The phosphorus containing flame retardant compound that can be used in combination with the nitrogen based organic flame retardant compound, can be any flame retardant compound containing phosphorus and at least one other element. Typically, the phosphorus containing flame retardant compound is an organic phosphorus compound, an inorganic phosphorus containing salt, or a combination of both.

Suitably, the phosphorus containing flame retardant compound is chosen from the group consisting of organic phosphates, phosphites, phosphonates and phosphinates. A large number of these flame retardants is commercially available, for example resorcinolbis(diphenylphosphate)oligomer, under the trade name Fyrolflex RDP from AKZO-Nobel, NL; cresyldiphenylphosphate, CDP, under the trade name Kronitex CDP from FMC, UK; trimethylolproponol ester of methyl phosphoric acid, under the trade name Amgard P45 from Albright and Wilson, USA; polypentaerythritol phosphonate under the trade name Cyagard RF 1041 from American Cyanamid, USA. Hostaflam OP 910; a mixture of cyclic di- and triphosphonates containing 21 wt.% P, from Hoechst, Germany. Preferably use is made of phosphates and phosphonates. Examples of such compounds are described in for example Kirk Othmer Encyclopedia of chemical technology, Vol. 10, p. 396 ff. (1980). Suitable flame retardant compounds comprising both phosphorus and nitrogen include, for example ammoniumpolyphoshate and phosphate salts of the nitrogen based organic flame retardant compounds, mentioned above, like melamine polyphosphate.

Preferably, the composition comprises less than 0.5 pbw, more preferably less than 0.1 pbw and still more preferably less than 0.01 pbw of the phosphorus containing flame retardant compound and ultimately no phosphorus containing flame retardant compound. The compositions according to the invention, despite the low content of the phosphorus containing flame retardant compound, or even the total absence thereof, still shows very good electrical and flame retardant properties, with good mechanical properties and a good performance under tropical conditions.

As the thermoplastic polyester in the composition according to the invention (component A-i), in principle any thermoplastic polyester can be used that is suitable for making molded parts. The thermoplastic polyester can be an amorphous polyester, but preferably is a semi-crystalline polyester, more preferably a semi-crystalline semi-aromatic. Said polyester is generally derived from at least one aromatic dicarboxylic acid or an ester-forming derivative thereof and at least one (cyclo)aliphatic or aromatic diol, and includes homo- as well as copolymers. Examples of suitable aromatic diacids include terephthalic acid, isophthalic acid, naphthalene dicarboxylic acid, biphenyl dicarboxylic acid, etc., with terephthalic acid being preferred. Suitable diols include for example alkylene diols, hydroquinone, dihydroxyphenyl, naphthalenediol. Alkylene diols, like ethylene diol, propylene diol, 1,4-butylene diol or butane diol, neopentylene diol, and cyclohexane dimethanol are preferred. These semi-aromatic polymers may further comprise small amounts of, for example, aliphatic dicarboxylic acids, functional alcohols and / or carboxylic acids and 3 or higher functional alcohols and / or carboxylic acids, provided that these polyesters remain melt-processable.

Suitable semi-aromatic thermoplastic polyesters that can be used in the composition according to the invention are, for example, polyalkyleneterephthalates, like polyethyleneterephthalate (PET), polytrimethyleneterephthalate (PTT), poly(1,4-butylene terephthalate) or simply called poly(butylene terephthalate) (PBT), polycyclohexanedimethyleneterephthalate (PCT), poly(alkylene naphthanate)s, which polyesters can be derived for example from 2,6-naphthalenedicarboxylic acid and ethylene glycol and/or butane diole, like polyethylenenaphthanate (PEN) and polybuthylenenaphthanate (PBN), poly(alkylene naphthanate)s, which polyesters can be derived for example from 4,4'-diphenyldicarboxylic acid and ethylene glycol and/or butane diole, like polyethylenebisbenzoate (PEBB) and polybuthylenebisbenzoate (PBBB), which can be derived for example from 2,6-naphthalenedicarboxylic acid, 4,4'-diphenyldicarboxylic acid which can be derived for example from 2,6-naphthalenedicarboxylic acid and ethylene glycol and/or butane diole, 4,4'-diphenyldicarboxylic acid and any copolymers and any mixtures thereof or copolymers thereof with a minority content of another dicarboxylic acid or diol, if any. Preferably, the content of other monomers in these polyesters is below 20 wt.%, below 10 wt%, more preferably below 5 wt.%, relative to the total weight of the polyester, to ensure the semi-crystallinity of the polyester. Also blends of different types and/or grades of poly(alkylene terephthalates) can be used. These polyester compositions are very suited for use as molding compositions.

A special class of polyesters is formed by polyesters containing long chain diols, like poly(alkylene oxide) diols, aliphatic polyester diols or aliphatic polycarbonate diols in addition to other said diols. This last group of polyesters, including so-called polyether esters and polyester esters, is also referred to as segmented blockcopolyesters. Depending on the amount of long chain diol in such polyester, the material can be a stiff but tough plastic or a flexible thermoplastic elastomer. Said polyesters and their preparation are for example described in 'Encyclopedia of polymer science and technology', Vol. 12, John Wiley &Sons, New York, 1988 (ISBN 0-471-80944-6).

In a preferred embodiment the thermoplastic polyester is a poly(alkylene terephthalate) based on an aliphatic diol with 2 to 6 carbon atoms. This group comprises poly(ethylene terephthalate) (PET), poly(propylene terephthalate) (PPT), poly(butylene terephthalate) (PBT), poly(cyclohexane terephthalate) (PCT), or copolymers thereof. Of these polyesters PET, PTT and PBT and mixtures and copolymers thereof are most preferred. These polyesters are very suited for use in molding compositions, especially in injection-molding compositions. Particularly preferred is a PBT/PET polyester blend, which results in moulded parts with better surface appearance.

In another special embodiment according to the invention the composition contains as the polyester a poly(butylene terephthalate) containing long chain diols. Advantages thereof include easy processing during compounding and injection moulding, and a relatively high toughness, e.g. elongation at break of the composition and parts moulded there from. Preferably, the amount of long chain diol is such that the PBT blockcopolyester has a hardness in the range of about 25-75 Shore D; preferably about 35-70 Shore D.

If PBT is used as the polyester, it preferably has a relative solution viscosity of 1.7-2.5, or 1.8-2.2 (as measured on a 1 mass % solution in m-cresol at 25°C). The advantage thereof is favorable melt-flow behavior of the polyester composition, and sufficient mechanical properties, e.g. stiffness and toughness, to make thin-walled structural parts.

Since the thermoplastic polyester makes up for at least 50 wt% of the polymer composition, the polyester composition according to the invention generally results in molded parts , wherein the thermoplastic polyester forms a continuous phase.

The composition according to the invention, may comprise, next to the thermoplastic polyester, one or more other polymers (component A-ii), the total amount of these other polymers being at most 50 pbw, relative to the total of 100 pbw of the thermoplastic polyester and the other polymers in the polymer composition (A).

Suitable other polymers that may be comprised include thermoplastic polymers different from the thermoplastic polyesters (A-I), such as semi-crystalline thermoplastic polymers and amorphous thermoplastic polymers, and impact-modifiers and compatiblizers. The other polymers may be used, for example, to improve certain properties of the composition, such as impact modifiers, which are used to improve the impact properties, or to facilitate the compounding process, such as carrier polymers, which are used to facilitate the addition of additives.

Suitable thermoplastic semi-crystalline polymers that can be used in the composition according to the invention next to the thermoplastic polyester are, for example, semi-crystalline thermoplastic polyamides and semi-crystalline thermoplastic elastomers.

Suitable amorphous thermoplastic polymers include styrenic and acrylic polymers, polycarbonates, especially aromatic polycarbonates, and mixtures or copolymers thereof. The amorphous polymer preferably has a glass transition temperature (T_{g}) higher than the T_{g} of the polyester polymer. Preferred polymers include thermoplastic polymers of styrene, alpha-methylstyrene, methyl acrylate, methylmethacrylate, acrylonitrile, methacrylonitrile, maleic acid anhydride, N-substituted maleimide, vinyl acetate, or mixtures thereof. Preferred polycarbonates are aromatic polycarbonates prepared from a dihydric phenol and a carbonate precursor, including copolymers like polyester carbonates. Most preferred is the polycarbonate derived from bisphenol A and its copolymers, generally simply called polycarbonate.

Preferably, the other polymer is a thermoplastic polycarbonate. Thermoplastic polycarbonates are typically essentially linear polycondensation products of carbondioxide and aliphatic and/or aromatic dihydroxy compounds. The thermoplastic polycarbonate may be any known polycarbonate that can be processed by melt processing, either as such or in combination of a thermoplastic polyester, into a molded part. These polycarbonates are known, for example from Technische Thermplaste, Polycarbonate, Polyacetale, Polyester and Celluloseester, Kunststof Handbuch 3/1, Ed. Ludwig Bottenbruch, Becker/Braun, Carl Hanser Verlag, Munchen, 1992, ISBN 3-446-16368-9, Part 3, page 117-297.

Preferably, the thermoplastic polycarbonate is 2,2-bis(4-hydroxyphenyl)-propane-polycarbonate or bisphenol-A-polycarbonate , generally abbreviated as PC.

As impact-modifier generally a rubber material is used, preferably consisting of or comprising functionalised copolymers that are compatible with or reactive towards the polyester and having a T_{g} below ambient temperature, preferably below 0, -20 or even below -40°C. Suitable examples include styrenic, olefinic or (meth)acrylic copolymers with acid, acid anhydride-, or epoxy functional groups, like a copolymer of ethylene, methylmethacrylate and glycidyl methacrylate or a maleic anhydride-functionalised copolymer of ethylene and propylene. Also suitable are acrylonitrile butadiene styrene copolymers (ABS), styrene butadiene styrene copolymers (SBS) or hydrogenated versions thereof (SEBS), methacrylate butadiene styrene (MBS), or core-shell polymers having an acrylate rubber core and a shell comprising a vinyl aromatic compound and/or a vinyl cyanide and/or an alkyl(meth)acrylate.

An effective amount of impact-modifying polymer is generally about 3-15 pbw, relative to a total of 100 pbw of the polymer composition (A).

Compatibilizers are generally used in combination with a blend of the thermoplastic polymer with another immiscible polymer.

As is clear from the objective of the present invention, that the other polymers that can be used in the composition according to the invention shall be used in such an amount that the basic requirements including the mechanical, electrical and flammability properties are still met. The person skilled in the art can simply determine the amounts in which the other polymers can be used by routine experiments.

Preferably, the composition according to the invention comprises at most 20 pbw, more preferably at most 10 pbw, and most preferably at most 5 pbw, of the other polymer relative to the total of 100 pbw of thermoplastic polyester and other polymers in the total composition.

Next to the polymer composition and the flame retardant system, the composition according to the invention comprise between 0.01 and 1 pbw of a mould release agent (component C).

Suitable mould release agents that can be used in the composition according to the invention are, for example, saturated fatty acids or derivatives thereof, such as esters based on polyols, amides based on polyamines, metal salts based on alkali and alkali earth metals or other metals like zinc, or fluorinated polyolefines. Examples of suitable mould release agents include ethylenebisstearylamide, pentaerhytrytoltetrastearate and montanate waxes

Preferably, the composition according to the invention comprises the mould release agent in an amount of 0.05-0.75 pbw, more preferably 0.10-0.50 pbw, and still more preferably 00.20-0.30 pbw. The advantage of a lower amount of mould release agent is that the GWIT is further improved.

Next to the polymer composition (A) the flame retardant system (B) and the mould release agent (C), the composition according to the invention may comprise 0-10 pbw of a fibrous reinforcing agent (component D) and 0-100 pbw of other additives (component E).

The polyester moulding composition according to the invention may comprise 0-10 pbw, preferably 0-7.5 pbw, more preferably 0-5 pbw, and even more preferably 0-3 pbw of a fibrous reinforcing agent (component D). It is noted that the composition according to the invention already has good mechanical properties and a very good behavior under tropical conditions, when no fibrous reinforcing agent is present at all. Fibrous reinforcing agents are herein understood to mean elongated particles having a length much greater than its dimensions in transverse directions and having an aspect ratio, that is the ratio of length to thickness, of at least 10. Suitable reinforcing agents include glass fibers. Suitable glass fibers generally have a fiber diameter of about 5-20 micron, preferably about 10-15 micron, and comprise a sizing suited for polyesters. Fibrous reinforcing agents are generally used in order to obtain a polyester composition with desirable combinations of strength, stiffness, elongation at break and impact resistance values

Next to the components (A)-(D) the polyester composition according to the invention optionally contains other additives (component E). Suitable additives that may be comprised in the composition according to the invention include the usual additives, such as inorganic fillers, plasticizers, CTI improving agents, processing aids, stabilizers, dispersing aids, pigments, colorants, etc.

Fillers are understood herein to be inorganic particle shaped materials, which may function both as a reinforcing agent and as an extender. The particles may have different shapes but are explicitly non-fibrous. These filler materials can have various forms, including globular, platelet or needle-like shapes. If the filler is needle-like, its aspect ratio is below 10, preferably below 8. Examples of suitable inorganic fillers include glass beads, silica, (calcined) clay, mica, talc, kaolin, wollastonite, etc.

The composition according to the invention may comprise the filler in an amount varying over a wide range, generally 0-80 pbw, typically 5-49 pbw, but preferably 0-20 pbw, more preferably 0-10 pbw. Ultimately, the composition according to the invention does not comprise filler at all.

The composition according to the invention does not require the presence of a CTI additive for a CTI of at least 400 V. However, a CTI improving additive or additives may advantageously be added if a higher CTI value is required. If a CTI improving additive is used, the amount thereof preferably is 0.01-5 pbw, preferably 0.05-1 pbw, still more preferably 0.1-0.5 pbw.

Suitable additives for improving the CTI include, for example, apolar polymers like polyolefines, such as polyethylene and/or ethylene copolymers, inert fillers, like bariumsulphate and metal borates, such as calcium borate and zinc borate, and compressed pulverized talc. The CTI improving additive is suitably be used in an amount of 0-5 pbw, for example 0-3 pbw, preferably 0-1 pbw. If the CTI improving additive consists of or comprises compressed pulverized talc, the amount thereof preferably is less than 1 pbw, more preferably be low 0.5 pbw or even below 0.1 pbw. Ultimately, the amount of CTI improving agent is 0.

Suitable processing aids include e.g. lubricants, nucleating agents and flow-promoters, but exclude herein specifically mould release agents.

Suitable stabilizers include, for example, UV-stabilizers; heat stabilizers and anti-oxidants, or combined thermo-oxidative stabilizers, like sterically hindered phenol compounds, sterically hindered amines and phosphates; and organic compounds with functional groups such as acid scavengers like carbodiimides and epoxy compounds, which can act as hydrolysis stabilizers.

The polyester composition according to the invention may also contain colorants or dyes and pigments, like inorganic pigments and organic pigments. The type of colorant and/or pigment and the amount thereof are chosen so that it does not deteriorate the CTI below 400 V and the GWIT below 775 °C, or higher values if so desired.

Preferably, the color of the composition is not very dark or black, in order to allow on the molded part a dark laser marking, that is visible in contrast with a lighter background color. Most preferred are relatively light colors, like (off-)white, beige, or gray, like the light-gray color RAL 7035, which is frequently used in E&E applications.

The composition according to the invention comprises less than 0.1 wt%, relative to the weight of component (B-i), of an organic additive having two functional groups. Examples of functional groups are epoxy groups, carboxylic anhydride groups, isocyanate groups, oxazoline groups, carbodiimide groups, aldehyde groups, carboxyl groups, aziridinyl groups and cyanate groups. Typically, the content is 0 wt.%, i.e. no such additive having two functional groups is used at all.

Typically the other additives are present in a total amount of at most 100 pbw. Preferably, the composition according to the invention comprises the other additives in a total amount of 0-49 pbw, more preferably 0-35 and more preferably 0-25 pbw.

In a special embodiment, the composition according to the invention consists of:
(A) 100 parts by weight (pbw) of a polymer composition consisting
   (A-i) at least 70 pbw of a thermoplastic polyester, and, optionally,
   (A-ii) at least one other polymer,
(B) between 2 and 40 pbw of a flame retardant system consisting of
   (B-i) a nitrogen containing organic flame retardant compound free of phosphorus or phosphorus free salt thereof consisting for at least 90 weight% of melamine cyanurate or a melamine condensation product, and, optionally,
   (B-ii) less than 0.1 pbw of a phosphorus containing flame retardant compound,
(C) 0.01- 0.5 pbw of a mould release agent,
(D) 0-5 pbw of a fibrous reinforcing agent,
(E) 0-49 pbw of other additives.

In a more special embodiment, the composition according to the invention consists of:
(A) 100 parts by weight (pbw) of a polymer composition consisting
   (A-i) at least 90 pbw of a thermoplastic polyester, and, optionally,
   (A-ii) at least one other polymer,
(B) between 5 and 25 pbw of a flame retardant system consisting of
   (B-i) 2-25 melamine cyanurate, and, optionally,
   (B-ii) less than 0.1 pbw of a phosphorus containing flame retardant compound,
(C) 0.01 - 0.5 pbw of a mould release agent,
(D) 0-2 pbw of a fibrous reinforcing agent,
(E) 0-25 pbw of other additives chosen from the group consisting of inorganic fillers, plasticizers, CTI improving agents, processing aids, UV-stabilizers, heat stabilizers, anti-oxidants, dispersing aids, pigments and colorants, and mixtures thereof.

The polyester composition according to the invention can be prepared in any customary manner by blending the various components in a suitable mixing device. Preferred devices are extruders, especially twin-screw extruders, most preferably with co-rotating screws. In a preferred method, the polyester and the optional other polymers are dosed to the first feed port and the nitrogen based organic flame retardant compound, optionally pre-blended with other additives, downstream. The advantage thereof is better control over the maximum temperature during compounding, and better dispersing of components into the polyester.

In another special embodiment, the composition is subjected to a heat-treatment after mixing or compounding, preferably at a temperature close to but below the melting point of the polyester polymer, and under reduced pressure or a flow of an inert gas. This heat-treatment will increase the molar mass and the relative viscosity of the polyester in the composition (also referred to as solid-state post-condensation), and improve mechanical properties of the composition.

The invention also relates to a molded part for use in electrical or electronic applications, wherein the part is molded from a polyester composition according to the invention. Preferably such a part is made via injection moulding techniques.

Preferably, the moulded part is a connector or a housing for an electrical circuit breaker or switchgear, a contactor, a motor starter, or a fuse holder. The moulded part may also be, for example, a housing for a lamp or a base for an energy saving lamp.

The part may further be provided with a dark marking on a lighter background surface.

The invention also provides an article, like an electrical or electronic appliance, comprising a part moulded from a polyester composition according to the invention. Such a part may be, for example, an electrical circuit breaker or switchgear comprising a housing made from the polyester composition according to the invention or an energy saving lamp comprising a lamp base made from the polyester composition according to the invention.

The invention will now be further illustrated by means of the following examples and comparative experiments.

### Materials

- PBT, ηᵣₑₗ = 2.0, measured in m-cresol, from DSM, The Netherlands
- Mecy-1: MC50, melamine cyanurate from CIBA Geigy, Switzerland, d₅₀ = 8 µm
- MRA: Glycolube P, pentaearythritoltetrastearate (PETS), a mould release agent from Lonza Group, USA

### Compounding

The compositions were mixed using a Berstdorff 2548D co-rotating twin-screw extruder with degassing at a set temperature of 250°C-260°C, speed of 300 revolutions/minute and throughput 35 kg/hour. Ground PBT and solid components were premixed in dry condition

### Iniection-molding

For the injection molding the granules obtained by compounding in the extruder were dried for 24 hours at 120°C.

An injection-molding machine of type Engel 80 A was used for the injection molding at set temperatures of 235-245°C. The mould temperature was 90°C. Cycle times were about 50 sec. for the tensile test specimens.

### Test methods

### Mechanical properties:

Tensile test was performed according to ISO 527/1A using dry-as-molded samples. Dimensions of tensile test specimens: thickness 4 mm

### Flammability:

GWFI-EPT(glow wire end-product test) according to IEC 60695-2-11.
GWFI (Glow wire flammability index) according to IEC 60695-2-12
GWIT (Glow wire ignition temperature) according to IEC 60695-2-13
Dimensions of glow wire test plates: 80x80 mm, thickness 1.5 mm and 1.0 mm

### CTI:

The comparative tracking index was measured according to IEC 60112. Dimensions of CTI test plates: thickness 4 mm.

### Compositions and test results

The compositions for the Examples (EX. 1-3) and Comparative Experiments (C.E.A-C), as well as the results for demoulding behaviour in injection moulding trials, the mechanical properties, the flame-retardant behavior in the glow wire test, and the CTI are given in Table 1.

**Table 1: Compositions and test results for Examples (EX) 1-3 and Comparative Experiments (C.E.) A -C**

| **Sample** | | EX.1 | EX.2 | EX.3 | C.E. A | C.E. B | C.E. C |
|---|---|---|---|---|---|---|---|
| **Composition** | *units* | | | | | | |
| PBT | [pbw] | 100 | 100 | 100 | 100 | 100 | 100 |
| Mecy | [pbw] | 10.8 | 17.7 | 25.1 | 17.4 | 17.6 | 42.2 |
| MRA | [pbw] | 0.28 | 0.29 | 0.31 | | 1.12 | |
| | | | | | | | |

| Test Results | | | | | | | |
|---|---|---|---|---|---|---|---|
| Demoulding | | OK | OK | OK | Not OK | OK | Not OK |
| E-modulus | [MPa] | 3179 | 3403 | 3597 | 3404 | 3359 | 4010 |
| Stress at break | [MPa] | 56.6 | 53.6 | 49.6 | 53.5 | 53.3 | 41.8 |
| Strain at break | [%] | 3.58 | 2.51 | 2.02 | 2.58 | 2.50 | 1.27 |
| GWFI-EPT 960°C | yes/no | yes | yes | yes | yes | no | Yes |
| 1.5 mm | [pass/ | 10 | 10 | 10 | 10 | 0 | 10 |
| 10 samples | fail] | 0 | 0 | 0 | 0 | 10 | 0 |
| GWFI-EPT 960°C | yes/no | yes | yes | Yes | yes | No | Yes |
| 1.0 mm | [pass/ | 9 | 10 | 10 | 10 | 0 | 10 |
| 10 samples | fail] | 1 | 0 | 0 | 0 | 10 | 0 |
| GWIT 1.5 mm | [°C] | 775 | 775 | 750 | 850 | 725 | 850 |
| GWIT 1.0 mm | [°C] | 850 | 825 | 825 | 925 | 725 | 850 |
| CTI | [V] | 600 | | | | | |

Whereas in general the flame retardancy of materials in tests like UL-94-V increases with sample thickness, the present results with almost all samples for the GWIT point the other way. The results of example 3 show that a high GWFI-EPT does not guarantee a good GWIT at all thicknesses. *Vice versa,* in other comparative experiments it was observed that a good GWIT, even at higher thickness, does not guarantee a high GWFI-EPT. Furthermore, from Comparative Experiment B it is clear that if the amount of mould release agent is too high, the GWIT becomes too low. The experiments also clearly show that a lower content of both the nitrogen containing flame retardant and the mold release agent have a positive effect on the GWIT, whereas the content of the nitrogen containing flame retardant can be reduced to very low amounts, while still retaining very good GWFI-EPT and GWFI values. From Comparative Experiment C it is clear that if the amount of nitrogen containing flame retardant is too high, there is no improvement in GWFI-EPT or GWIT, in fact it even gets worse at the 1.0 mm thickness, whereas the mechanical properties (in particular the elongation) significantly reduce.

## Claims

1. A polyester molding composition having a comparative tracking index (CTI) of at least 400 Volt and a glow wire ignition temperature (GWIT) of at least 775°C at 1.0 mm, consisting of
(A) 100 parts by weight (pbw) of a polymer composition consisting of
(A-i) at least 50 pbw of a thermoplastic polyester, and, optionally,
(A-ii) at least one other polymer,
(B) between 2 and 40 pbw of a flame retardant system consisting of
(B-i) a nitrogen based organic flame retardant compound free of phosphorus or a phosphorus free salt thereof, and, optionally,
(B-ii) less than 1 pbw of a phosphorus containing flame retardant compound, comprising less than 0.1 pbw of an arylenedioxy-tetrakisphenyl-diphosphate and substituted and oligomeric derivatives thereof,
(C) between 0.01 and 1 pbw of a mould release agent, and optionally
(D) 0-10 pbw of a fibrous reinforcing agent, and
(E) 0-100 pbw of other additives.

2. A composition according to claim 1, wherein the nitrogen containing organic flame retardant compound (B-i) is a compound selected from the group consisting melamine cyanurate and condensation products of melamine, and mixtures thereof.

3. A composition according to claim 1 or 2, wherein the nitrogen containing organic flame retardant compound (B-i) consists for at least 90 wt% of melamine cyanurate.

4. A composition according to any of claims 1-3, wherein the nitrogen containing organic flame retardant compound (B-i) is present in an amount between 5 and 25 pbw, preferably between 7.5 and 20 pbw.

5. A composition according to any of claims 1-4, wherein the flame retardant system (B) comprises less than 0.1 pbw of the phosphorus containing flame retardant compound (B-ii).

6. A composition according to any of claims 1-5, wherein the thermoplastic polyester (A-i) is PET, PTT, PBT or a mixture or a copolymer thereof.

7. A composition according to any of claims 1-6, wherein the polymer composition comprises as the other polymer (B-ii), a rubber impact modifier, a thermoplastic polymer, a compatibilizer polymer or a combination thereof.

8. A composition according to any of claims 1-7, wherein the composition comprises 0.05-0.5 pbw of the mould release agent (C), relative to 100 pbw of the polymer composition (A).

9. A composition according to any of claims 1-8, wherein the composition comprises 0-3 pbw of the fibrous reinforcing agent (D), relative to 100 pbw of the polymer composition (A).

10. A composition according to any of claims 1-9, wherein the at least one other additive (E) is selected from the group consisting of UV-stabilizers, heat-stabilizers, anti-oxidants, pigments, inorganic fillers, CTI improving agents and mixtures thereof.

11. A composition according to any of claims 1-10, wherein the at least one other additive (E) is present in an amount of 0-49 pbw, preferably 0-25 pbw, relative to 100 pbw of the polymer composition (A).

12. A composition according to claim 10, wherein the composition comprises the CTI improving additive in an amount of 0.01-5 pbw, preferably 0.05-1 pbw, relative to 100 pbw of the polymer composition (A).

13. Use of a composition according to any of claims 1-12 for making a molded part for use in electrical or electronic applications

14. Molded part for use in electrical or electronic applications made of a composition according to any of claims 1-12.

15. Molded part according to claim 14, wherein the molded part is a housing for an electrical circuit breaker, a switchgear, a contactor, a motor starter, or a fuse holder.

16. Molded part according to claim 14, wherein the molded part is a lamp housing or a lamp socket.

17. Electrical or electronic article, comprising a moulded part made of a composition according to any of claims 1-12.
